# FASCICULE DE BREVET EUROPEEN

(11) **EP 3 568 657 B1**
(45) Date de publication et mention de la délivrance du brevet: **12.05.2021**
(21) Numéro de dépôt: 18714589.1
(22) Date de dépôt: 19.03.2018
(51) Int. Cl.: F28F 9/00, B60H 1/00, F28D 1/053

(54) **RADIATEUR À PLAQUE D'EXTRÉMITÉ EN U ORIENTÉE VERS L'INTÉRIEUR, ET SYSTÈME DE CHAUFFAGE, VENTILATION OU CLIMATISATION CORRESPONDANT**
HEIZKÖRPER MIT EINER NACH INNEN GERICHTETEN U-FÖRMIGEN ENDPLATTE UND ENTSPRECHENDER HEIZUNGS-, LÜFTUNGS- ODER KLIMAANLAGE
RADIATOR COMPRISING AN INWARD-FACING U-SHAPED END PLATE, AND CORRESPONDING HEATING, VENTILATION OR AIR-CONDITIONING SYSTEM

(30) Priorité: 17.03.2017 FR 1752212
(43) Date de publication de la demande: 20.11.2019
(73) Titulaire: Valeo Systemes Thermiques, 78322 Le Mesnil Saint-Denis Cedex (FR)
(72) Inventeur: TAKANO, Akihiko, 72210 La Suze Sur Sarthe (FR); MOREAU, Sylvain, 72210 La Suze Sur Sarthe (FR); LARONDE, Rémi, 72210 La Suze Sur Sarthe (FR)
(74) Mandataire: Bialkowski, Adam
(86) Numéro de dépôt international: PCT/FR2018/050662
(87) Numéro de publication internationale: WO 2018/167445

(56) Documents cités:
- US-A- 3 228 461
- US-A- 5 662 162
- US-A1- 2007 240 863
- US-A1- 2016 375 742
- US-B1- 6 179 050

## Description

### 1. Domaine de l'invention

Le domaine de l'invention est celui des radiateurs pouvant être mis en œuvre au sein de véhicules automobiles, notamment au sein de systèmes de chauffage, ventilation ou climatisation, communément appelé système HVAC pour « Heat Ventilation Air Conditionning » en langue anglaise, ainsi que celui de tels systèmes Un tel radiateur selon le préambule de la revendication 1 est connu de US 5 662 162.

L'invention concerne notamment le remplissage de la fonction étanchéité entre la chambre d'un tel système et le radiateur venant s'y loger.

### 2. Art antérieur

Des radiateurs sont couramment mis en œuvre au sein de véhicules automobiles pour assurer le refroidissement ou le réchauffement de fluides. Ils peuvent par exemple être intégrés à un système HVAC ou autre.

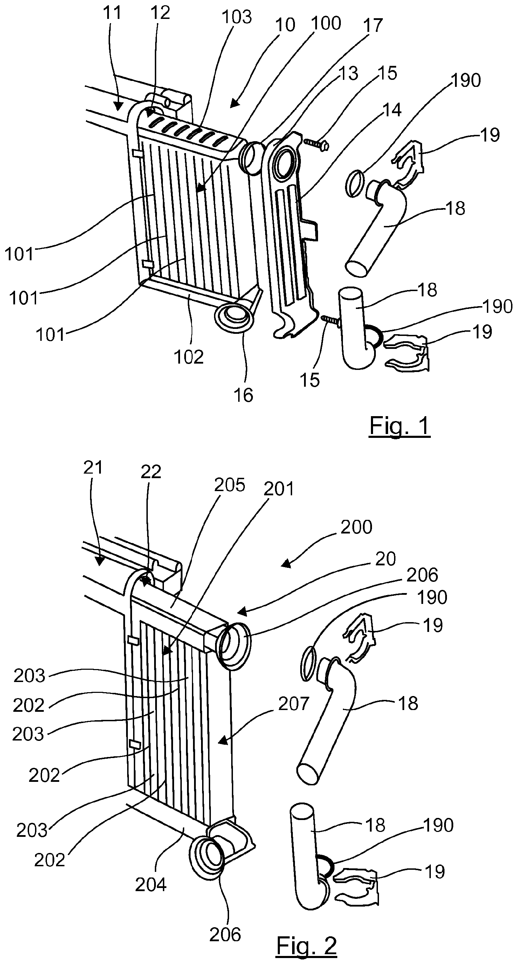

La figure 1 illustre un système HVAC selon l'art antérieur.

Ainsi que cela est représenté sur cette figure, un tel système comprend un radiateur 10 destiné à être logé à l'intérieur d'une chambre hermétique 11 munie d'un passage d'introduction 12 du radiateur 10.

Pour assurer l'étanchéité, notamment à l'air, de la chambre hermétique 11 au niveau du passage d'introduction 12, un joint 13 et un couvercle 14 sont mis en œuvre.

Ainsi, après que le radiateur 10 est introduit dans la chambre 11 en le faisant passer au travers du passage d'introduction 12, le joint 13 est déposé à l'extrémité du radiateur 10 à la surface du passage d'introduction 12, puis le couvercle 14 est rapporté sur le joint 13 et solidarisé à la chambre 11 au moyens de vis 15. Le joint 13 se trouve alors comprimé entre le couvercle 14, l'extrémité du radiateur 10 et le bord de la chambre 11.

Cette solution permet d'assurer de manière assez efficace l'étanchéité entre le passage d'introduction 12 et le radiateur 10 de façon à obtenir une chambre 11 fermée hermétiquement après introduction du radiateur 10.

Cette technique peut toutefois être améliorée.

L'extrémité du radiateur 10 se trouvant au regard du passage d'introduction 12 présente généralement une forme relativement complexe. En effet, un radiateur 10 comprend classiquement un corps 100 comprenant une pluralité de tubes 101 et deux réservoirs 102, 103, placés à deux extrémités opposées du corps 100, dans lesquels débouchent de part et d'autre chacun des tubes 101. Chaque réservoir 102, 103 est relié à un manchon 16, 17 permettant de raccorder le radiateur 10 à un circuit de circulation d'un fluide, comme par exemple un fluide caloporteur, comprenant des tuyaux 18 liés aux manchons 16, 17 par exemple avec des colliers 19, des joints 190 étant interposés entre les tuyaux et les manchons. Ces manchons 16, 17 sont situés à l'extrémité du radiateur 10 à proximité du passage d'introduction 12. Cette extrémité présente en conséquence une forme généralement complexe. Cette forme complexe est également liée au contour de la liaison entre chaque réservoir 102, 103 et le corps 100 du radiateur 10 qui est généralement obtenue par sertissage.

Il résulte notamment de cette forme complexe des difficultés pour assurer une étanchéité parfaite entre le radiateur 10 et la chambre 11 au niveau du passage d'introduction 12. La mise en œuvre d'un joint 13 et d'un couvercle 14 de fermeture permet de remplir de manière efficace cette fonction, mais toutefois de manière complexe et donc couteuse.

En outre, l'installation du radiateur 10 à l'intérieur de la chambre 11 est assez longue dans la mesure où elle suppose en premier lieu l'introduction du radiateur 10 dans la chambre 11, en second lieu la mise en place du joint 13 et enfin la fermeture de la chambre 11 au moyen du couvercle 14 qui doit être solidarisé à celle-ci.

La réalisation de fonction étanchéité entre le radiateur et la chambre d'un système HVAC peut en conséquence encore être optimisée.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une solution technique permettant d'optimiser l'accomplissement de la fonction étanchéité entre le radiateur et la chambre d'un système HVAC.

Notamment, l'invention a pour objectif, selon au moins un mode de réalisation, de fournir une telle technique qui permet de simplifier, tout en l'améliorant, l'étanchéité entre le radiateur et la chambre d'un système HVAC.

Un autre objectif de l'invention est, selon au moins un mode de réalisation, de fournir une telle technique qui permet de réduire le nombre de composants nécessaires à l'accomplissement de la fonction étanchéité entre le radiateur et la chambre d'un système HVAC.

Un autre objectif de l'invention est, selon au moins un mode de réalisation, de fournir une telle technique qui permet de faciliter l'installation d'un système HVAC.

Un autre objectif de l'invention est de procurer une telle technique qui soit, dans au moins un mode de réalisation, simple de conception et/ou robuste et/ou économique.

### 4. Présentation de l'invention

Pour ceci, l'invention propose un radiateur comprenant un corps et deux réservoirs disposés à deux côtés opposés dudit un corps, ledit corps comprenant une pluralité de tubes débouchant à chacune de leurs extrémités dans l'un desdits réservoirs et des intercalaires disposées de part et d'autre de chacun desdits tubes, ledit radiateur comprenant à une première extrémités dudit corps une plaque d'extrémité s'étirant sensiblement entre lesdits réservoirs.

Selon l'invention, ladite plaque d'extrémité présente une section essentiellement en U avec un fond prolongé par deux ailes latérales, ledit fond venant au contact de l'intercalaire situé à ladite première extrémité et lesdites ailes s'étirant le long des côtés de cet intercalaire, ladite plaque d'extrémité portant un joint d'étanchéité s'étendant autour de ladite première extrémité.

Ainsi, l'invention repose sur une approche originale qui consiste à coiffer l'extrémité du corps d'un radiateur au moyen d'une plaque de section essentiellement en U, le fond de cette plaque venant au contact de l'intercalaire situé à cette extrémité alors que les ailes de cette plaque s'étendent contre les bords de cet intercalaire. Les ailes de la plaque servent d'assise pour un joint d'étanchéité qui assure la fonction étanchéité entre le radiateur et la chambre d'un système HVAC, ce joint se trouvant interposé, lorsque le radiateur se trouve dans la chambre, entre le contour extérieur périphérique du radiateur et le contour périphérique intérieur de la chambre.

L'accomplissement de cette fonction étanchéité est ainsi réalisé efficacement de manière très simple, et à moindre frais, avec un nombre réduit de composants puisqu'il évite la mise en œuvre d'un couvercle tel que prévu par l'art antérieur. Cette conception permet encore de faciliter l'installation d'un système HVAC.

Selon une caractéristique possible, la largeur de ladite plaque d'extrémité, dans un plan transversal auxdits tubes et selon une direction parallèle auxdits tubes, est supérieure ou égale à l'épaisseur dudit corps et inférieure à la largeur desdits réservoirs.

Ceci permet de définir une assise essentiellement sans décrochement pour le joint d'étanchéité permettant de maximiser la fonction étanchéité entre le radiateur et la chambre.

Selon une caractéristique possible, la paroi de chaque réservoir présente une épaisseur e, la distance d de part et d'autre du radiateur entre le bord de chaque réservoir et ledit corps étant inférieure au double de l'épaisseur e.

Ceci permet également de définir une assise essentiellement sans décrochement pour le joint d'étanchéité permettant de maximiser la fonction étanchéité entre le radiateur et la chambre.

Dans ce cas, ladite distance d est préférentiellement inférieure ou égale à 1 millimètre.

Un tel décrochement de l'assise du joint peut facilement être compensé par le joint lui même sous l'effet de sa compressibilité et élasticité.

Selon une caractéristique possible, chaque réservoir comprend un collecteur ayant une section sensiblement en U avec une paroi de fond et deux parois latérales et un couvercle ayant une section sensiblement en U une paroi de fond et deux parois latérales, les parois latérales du collecteur présentant des butées formant saillie à l'intérieur du collecteur à distance du fond de celle-ci, lesdites parois latérales dudit couvercle étant en appuis contre lesdites butées.

Cette configuration permet de disposer les tubes de telle sorte que leur bord (ou nez) s'étend contre, ou à tout le moins à proximité, de la surface intérieure des parois latérales du collecteur. Ainsi, la distance d de part et d'autre du radiateur entre le bord (paroi latérale) de chaque réservoir et le corps (bord des tubes) peut être réduite pour être est inférieure au double de l'épaisseur e des parois du collecteur et préférentiellement inférieure ou égale à 1 millimètre.

Selon une variante possible, lesdites ailes de ladite plaque d'extrémité s'étendent sur sensiblement la moitié de l'épaisseur dudit intercalaire placé à ladite première extrémité.

Dans la mesure où la circulation d'air autour de chaque tube est optimisée de chaque côté de celui-ci par la moitié de l'intercalaire s'y trouvant, le fait de recouvrir l'extrémité du premier intercalaire par la plaque sur environ la moitié de sa largeur est sans incidence sur le réchauffage ou le refroidissement dans le premier tube. L'optimisation de la fonction étanchéité ne nuit donc pas à la performance énergétique du radiateur.

Selon une caractéristique possible, le bord extérieur dudit fond de ladite plaque d'extrémité s'étend essentiellement dans le prolongement de l'extrémité correspondante desdits réservoirs.

Ceci permet de réduire la distance séparant l'extrémité des manchons placés à l'extrémité des réservoirs et l'extrémité correspondante du corps. On obtient ainsi un radiateur plus compact.

Selon une variante possible, la longueur desdits réservoirs au-delà du premier tube à ladite première extrémité dudit corps est sensiblement inférieure ou égale au pas desdits tubes.

Il est ainsi possible de produire les réservoirs « au kilomètre » et de les découper à façon au niveau des passages d'introduction de tube. Ceci permet de réduire les coûts de production.

Selon une variante possible, ledit joint s'étend autour dudit radiateur en encerclant lesdits réservoirs.

Le joint exerce alors une fonction étanchéité sur toute la périphérique du radiateur.

Selon une caractéristique possible, ledit joint à une forme générale rectangulaire.

Ceci permet d'accomplir de manière efficace la fonction étanchéité.

Selon une caractéristique possible, ledit joint est solidarisé audit radiateur par collage.

Le collage est une technique simple et économique pour solidariser de manière efficace le joint au radiateur.

L'invention couvre également un système de chauffage, ventilation ou climatisation comprenant un radiateur selon l'une quelconque des variantes exposées lus haut et une chambre hermétique munie d'un passage d'introduction dudit radiateur, ledit radiateur étant logé dans ladite chambre, ledit joint disposé autour dudit radiateur assurant l'étanchéité entre le contour dudit radiateur et ledit passage d'introduction.

Selon une caractéristique possible, ledit joint s'étend autour de l'extrémité dudit radiateur se trouvant au niveau du passage d'introduction lorsque le radiateur se trouve logé dans la chambre.

Selon une caractéristique possible, ledit radiateur forme avec ledit joint un ensemble monobloc amovible pouvant être inséré dans ladite chambre ou extrait de celle-ci.

Ceci facilite la mise en place du radiateur dans la chambre.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un système HVAC selon l'art antérieur ;
- la figure 2 illustre un exemple de système HVAC selon l'invention dont le radiateur se trouve partiellement à l'intérieur de la chambre ;
- la figure 3 illustre une éclatée d'un radiateur selon l'invention ;

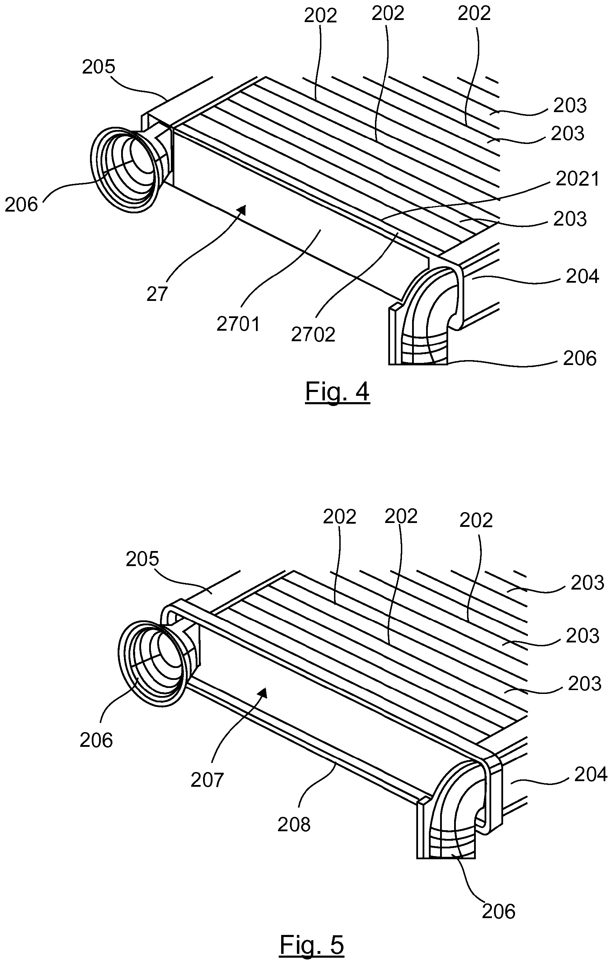

- la figure 4 illustre une vue en perspective de l'extrémité d'un radiateur selon l'invention destinée à se trouver au niveau du passage d'introduction lorsque le radiateur se trouve dans la chambre ;
- la figure 5 illustre une vue en perspective de l'extrémité d'un radiateur selon l'invention destinée à se trouver au niveau du passage d'introduction lorsque le radiateur se trouve dans la chambre, cette extrémité portant un joint ;
- la figure 6 illustre une vue partielle de l'extrémité d'un radiateur selon l'invention destinée à se trouver au niveau du passage d'introduction lorsque le radiateur se trouve dans la chambre ;
- la figure 7 illustre une vue partielle en coupe selon un plan passant par les axes longitudinaux des réservoirs de l'extrémité d'un radiateur selon l'invention destinée à se trouver au niveau du passage d'introduction lorsque le radiateur se trouve dans la chambre ;
- la figure 8 illustre une vue partielle en coupe selon un plan transversal aux tubes de l'extrémité d'un radiateur selon l'invention destinée à se trouver au niveau du passage d'introduction lorsque le radiateur se trouve dans la chambre ;
- la figue 9 illustre une vue partielle en coupe selon un plan parallèle aux tubes d'un radiateur selon l'invention.

### 6. Description de modes de réalisation particuliers

### 6.1. Rappel du principe de l'invention

L'invention se propose d'optimiser l'accomplissement de la fonction étanchéité entre le radiateur et la chambre d'un système HVAC.

Pour ce faire, l'invention propose de coiffer l'extrémité du corps d'un radiateur avec une plaque de section en U, le fond de cette plaque venant au contact de l'intercalaire situé à cette extrémité alors que les ailes de cette plaque s'étendent contre les bords de cet intercalaire. Les ailes de la plaque servent d'assise pour un joint d'étanchéité placé autour du radiateur qui assure l'étanchéité entre le contour périphérique du radiateur et le passage d'introduction lorsque le radiateur se trouve dans la chambre d'un système HVAC.

On réalise ainsi de manière simple et efficace cette fonction sans qu'il soit nécessaire de mettre en œuvre un joint d'extrémité et un couvercle comme le prévoit l'art antérieur.

### 6.2. Exemple d'un mode de réalisation

### 6.2.1. Architecture

On présente en relation avec la figure 2 l'architecture générale d'un système HVAC selon l'invention.

Ainsi que cela est représenté sur cette figure, un tel système 200 comprend classiquement un radiateur 20 et une chambre 21 munie d'un passage d'introduction 22 permettant l'insertion du radiateur 20 dans la chambre 21 ou l'extraction de celui-ci depuis la chambre 21.

Sur la figure 2, le radiateur 20 est représenté dans une position dans laquelle il se trouve partiellement inséré, ou partiellement extrait, de la chambre 21.

Lorsque le radiateur 20 n'est pas logé dans la chambre 21, celle-ci constitue une enveloppe fermée hormis au niveau du passage d'introduction 22 qui constitue une ouverture.

Ainsi qu'il sera expliqué plus en détail par la suite, lorsque le radiateur 20 se trouve logé à l'intérieur de la chambre 21, la chambre 21 constitue une enceinte hermétique en particulier étanche à l'air.

Le radiateur 20 comprend un corps de radiateur 201. Ce corps de radiateur comprend une pluralité de tubes 202 distants deux-à-deux selon un pas P préférentiellement régulier.

L'espace entre les tubes 202 est classiquement comblé au moyen d'intercalaires 203.

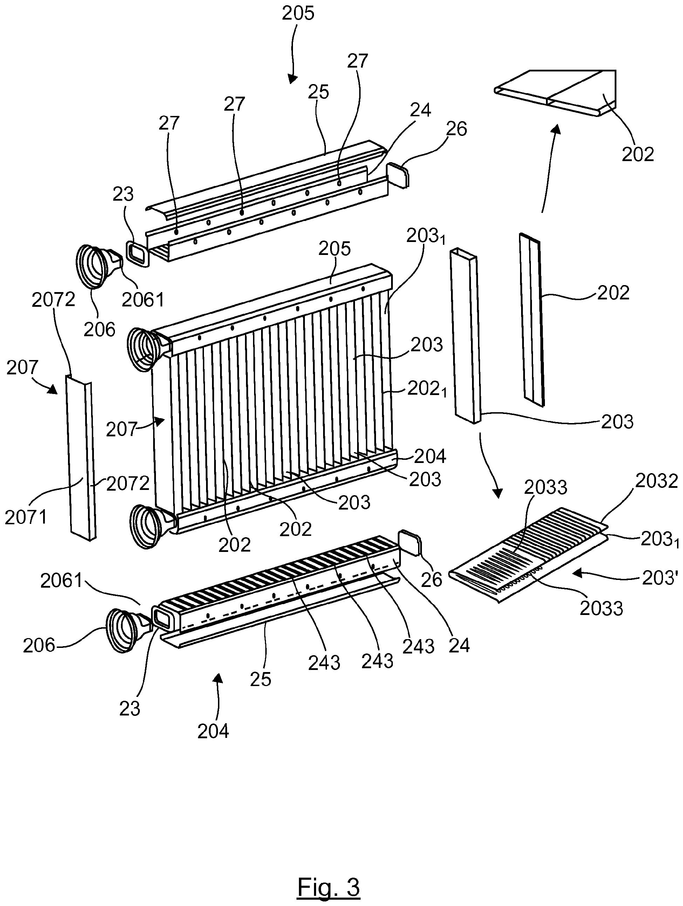

Chaque intercalaire 203 comprend une tôle pliée en zigzag, i.e. présentant une pluralité de convolutions dont une convolution 203' est représentée à la figure 3. Ils comprennent ainsi une pluralité d'ailes 2031, 2032 traversées par des perforations 2033 optimisant l'écoulement de l'air.

Le radiateur 20 comprend deux réservoirs 204, 205 disposés à deux côtés opposés du corps 201.

Les tubes 202 débouchent de part et d'autres dans les réservoirs 204, 205.

Chaque réservoir 204, 205 est relié à une première extrémité à un manchon 206, l'autre de ses extrémités étant close au moyen d'une plaquette d'extrémité 26.

Chaque manchon 206 est relié à l'extrémité du réservoir 204, 205 correspondant au moyen d'une entretoise 23 venant se loger :
- en périphérie intérieure dans une rainure périphérique 2061 ménagée à cet effet sur le manchon 206, et
- en périphérie extérieure dans une rainure périphérique (non représentée) ménagée dans le réservoir.

La plaquette d'extrémité 26 vient se loger dans une rainure périphérique (non représentée) ménagée dans le réservoir.

Les manchons 206 sont situés d'un premier côté du corps 201 alors que les extrémités bouchées sont situées à l'extrémité opposée du corps 201. Les manchons se trouvent à l'extrémité du radiateur se trouvant à proximité du passage d'introduction lorsque le radiateur se trouve dans la chambre 21.

Les manchons peuvent être coudés ou droits.

Un fluide, comme par exemple un liquide caloporteur, peut être amené à circuler à l'intérieur du radiateur 20 en entrant par l'un des manchons 206, en se répartissant dans le réservoir 204, 205 correspondant, en s'écoulant à l'intérieur des tubes 202 jusqu'à pénétrer l'autre réservoir 204, 205, puis en s'échappant du radiateur 20 au travers du manchon 206 correspondant.

Les réservoirs 204, 205 ont une section régulière. Leur contour périphérique ne présente pas de surépaisseur ou d'irrégularité de sertissage comme dans l'art antérieur. Il présent au contraire des surfaces essentiellement lisses. Leur section présente préférentiellement une forme essentiellement rectangulaire ou carrée, les angles pouvant néanmoins être arrondis plutôt qu'être vifs.

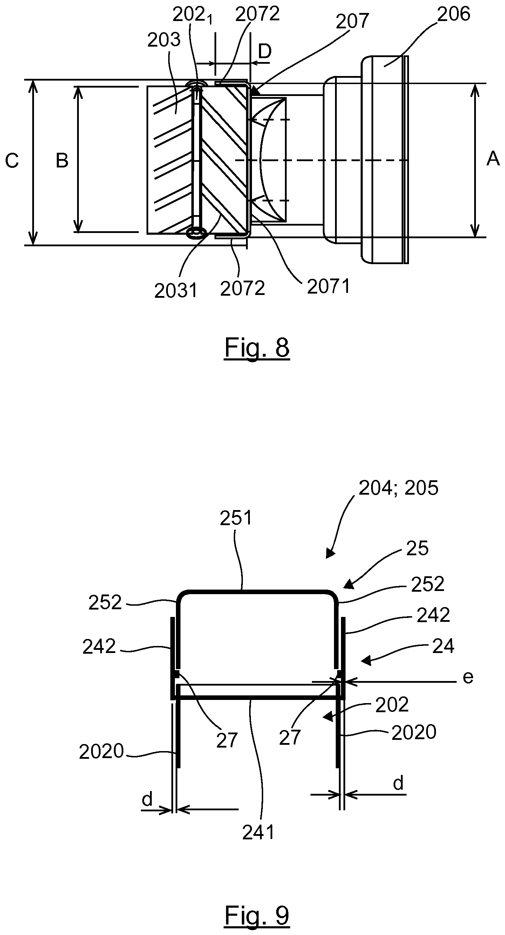

Ainsi que cela est représenté sur la figure 9, les réservoirs 204, 205 comprennent un collecteur 24 et un couvercle 25 refermant le collecteur 24.

Le collecteur 24 présente une section transversale essentiellement en U avec une paroi de fond 241 et deux parois latérales 242. Chaque paroi latérale 242 comprend des butées 27 formant saillie à l'intérieur du collecteur 24 à distance de la paroi de fond 241. Une pluralité de butée 27 est ménagée tout le long du collecteur 24. La paroi de fond 241 est traversée par des passages d'introduction 243 des tubes 202.

Le couvercle 25 présente une section sensiblement en U avec une paroi de fond 251 et deux parois latérales 252. La largeur extérieure du couvercle 25 est légèrement inférieure à la largeur intérieure du collecteur 24. Le couvercle 25 peut ainsi être inséré dans le collecteur 24. Les parois latérales 252 du couvercle 25 viennent alors en appui contre les butées 27. Le raccordement entre la paroi de fond 251 et les parois latérales 252 sera préférentiellement arrondi.

Du fait que les parois latérales 252 du couvercle 25 ne reposent pas sur la paroi de fond 241, les tubes 202 peuvent être disposés de telle sorte que leur bord ou nez 2020 s'étend contre, ou à tout le moins à proximité, de la surface intérieure des parois latérales 242 du collecteur 24. Ainsi, la distance d de part et d'autre du radiateur entre le bord (parois latérale 241) de chaque réservoir et le corps (bord 2020 des tubes 202) est inférieure au double de l'épaisseur e des parois du collecteur 24. L'épaisseur e de la paroi du réservoir qui sera avantageusement comprise entre 0,8 et 1 millimètre. Cette distance d est préférentiellement inférieure ou égale à 1 millimètre. Elle est au plus égale à l'épaisseur e des parois du collecteur.

La jonction entre les réservoirs 204, 205, leur collecteur et leur couvercle, les plaquettes d'extrémité 26, les entretoises 23, les manchons correspondants 206 et les tubes 202 est étanche. Elle est obtenue par brasage, l'ensemble de composants du radiateur étant réalisés en métal, par exemple en alliage d'aluminium, cladé (revêtu de métal d'apport) et assemblés les uns aux autres avant d'être placés dans un four de brasage pour solidarisation finale et étanchéisation.

L'extrémité du radiateur 20, destinée à se trouver au niveau du passage d'introduction 22 de la chambre 21, encore appelée première extrémité, comprend une plaque d'extrémité 207.

Ainsi que cela apparaît sur la figure 3, cette plaque d'extrémité 207 s'étend le long du corps 201 entre les deux réservoirs 204, 205, préférentiellement jusqu'à venir en butée contre eux. Elle présente ici essentiellement la forme d'un U comprenant un fond 2071 et deux ailes 2072. Les ailes sont essentiellement perpendiculaires au fond.

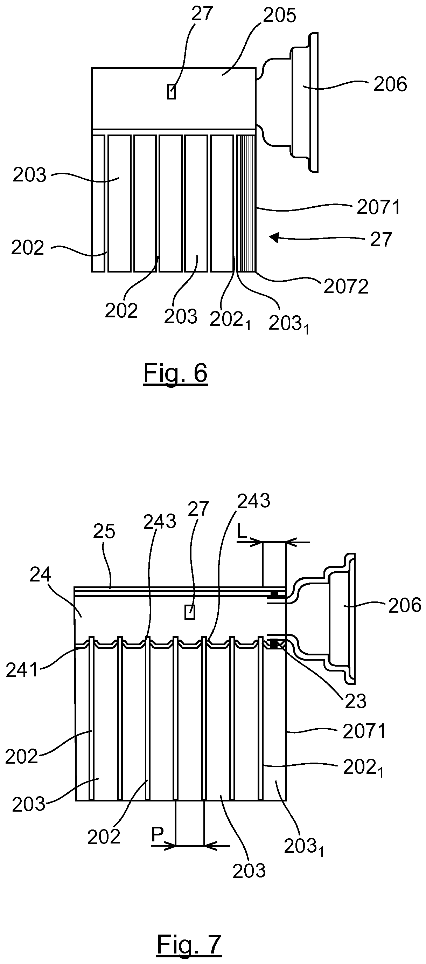

Le fond 2071 de la plaque d'extrémité 207 est en contact avec le premier intercalaire 203₁ présent à la première extrémité. Tel que cela apparaît sur la figure 7, les réservoirs s'étendent essentiellement jusqu'à l'aplomb de l'extrémité du première intercalaire 203₁. La longueur des réservoirs est donc sensiblement égale à celle du corps. La face tournée vers le corps du fond 2071 de la plaque d'extrémité 207 est en appui contre le premier intercalaire 203₁. La face tournée vers l'extérieur du fond 2071 de la plaque d'extrémité 207 s'étend essentiellement à l'aplomb de l'extrémité correspondante des réservoirs 204, 205 à l'épaisseur de la plaque près. Cette épaisseur est de l'ordre de 0,5 millimètre.

La plaque d'extrémité 207 est préférentiellement réalisée en alliage d'aluminium et soudée directement au premier intercalaire 203₁ par brasage. Elle pourra y être solidarisée par un autre moyen, comme par collage ou autre et être réalisée dans un autre matériau adapté.

Tel que cela apparaît sur les figures 6 et 8, les ailes 2072 de la plaque d'extrémité 207 s'étendent le long des côtés du premier intercalaire 203₁. Elles ont une épaisseur D choisie de manière telle qu'elles viennent recouvrir cet intercalaire sur environ la moitié de sa largeur. Cette distance D pourra préférentiellement être égale à la hauteur H des intercalaires diminuée de 1 à 3 millimètres, la hauteur H d'un intercalaire étant sa dimension selon un axe perpendiculaire aux tubes (cf. figure 6). Cette hauteur H sera préférentiellement comprise entre 5 et 6 millimètres, et avantageusement égale à 5,4 ou 5,8 millimètres.

Dans la mesure où la circulation d'air autour de chaque tube est optimisée de chaque côté de celui-ci par la moitié de l'intercalaire s'y trouvant, le fait de recouvrir l'extrémité du premier intercalaire par la plaque 207 sur environ la moitié de sa largeur est sans incidence sur le réchauffage ou le refroidissement dans le premier tube.

Tel que cela est visible sur la figure 8, qui illustre une coupe partielle du radiateur 20 selon un plan transversal aux tubes 202, la largeur A de la plaque d'extrémité 207, dans un plan transversal aux tubes 202 et selon une direction parallèle aux tubes 202, est supérieure ou égale à l'épaisseur B du corps 201 et inférieure à la largeur C des réservoirs 204, 205 dans un même plan et selon une même direction. L'épaisseur B du corps correspond à celles des tubes et des intercalaires qui sont sensiblement identiques.

La largeur A de la plaque d'extrémité 207 sera préférentiellement égale à l'épaisseur B du corps (ou faisceau) augmenter de deux fois l'épaisseur de la matière de la plaque qui sera avantageusement comprise entre 0,4 et 0,8 millimètres.

L'épaisseur B du corps sera préférentiellement comprise entre 20 et 30 millimètres et avantageusement égale à 21 ou 27 millimètres.

La largeur C des réservoirs sera préférentiellement égale à l'épaisseur B du corps augmentée de deux fois l'épaisseur e de la paroi du réservoir qui sera avantageusement comprise entre 0,8 et 1 millimètres, en outre augmentée de deux fois la distance f entre le nez des tubes et la paroi interne du collecteur, cette distance étant préférentiellement comprise entre 0 et 0,6 millimètres.

Tel que cela est visible sur la figure 7, qui illustre une coupe partielle du radiateur 20 selon un plan passant par les axes longitudinaux des réservoirs 204, 205, la longueur L des réservoirs 204, 205 au-delà du premier tube 202₁ à l'extrémité du corps 202 destinée à se trouver au niveau du passage d'introduction 22, est sensiblement inférieure ou égale au pas P des tubes 202. Il est ainsi possible de produire les réservoirs « au kilomètre » et de les découper à façon au niveau des passages d'introduction 243 de tube.

Le pas P des tubes, c'est-à-dire l'entraxe entre deux tubes consécutifs, sera préférentiellement compris entre 6 et 8 millimètres et avantageusement égal à 7 ou 6,6 millimètres.

Le système selon l'invention comprend un joint 208 disposé autour du radiateur 20 pour assurer l'étanchéité entre le contour du radiateur 20 et le passage d'introduction 22 lorsque le radiateur 20 se trouve logé à l'intérieur de la chambre 21.

Ce joint 208 est situé au niveau de l'extrémité du radiateur 20 destinée à se trouver au niveau du passage d'introduction 22 lorsque le radiateur 20 se trouve logé à l'intérieur de la chambre 21.

Le joint 208 s'étend autour du radiateur 20 en encerclant les réservoirs 204, 205. En d'autres termes, il s'étend tout le long de la périphérie du radiateur. Il s'étend également autour de la plaque d'extrémité 207, c'est-à-dire le long des bords de la plaque d'extrémité 207, ici sur les ailes 2072 de celle-ci. Les ailes de la plaque d'extrémité constituent ainsi avec les réservoirs une assise pour le joint 208.

Du fait que la distance d de part et d'autre du radiateur entre le bord (parois latérale 241) de chaque réservoir et le corps (bord 2020 des tubes 202) est inférieure au double de l'épaisseur e des parois du collecteur, et préférentiellement inférieure ou égale à 1 millimètre, le contour périphérique du radiateur 20 présente une surface essentiellement régulière et plane exempte d'irrégularité, de surépaisseur, de bossage ou de décrochement contrairement aux radiateurs de l'art antérieur présentent des raccordements de sertissage des réservoirs. On forme ainsi une surface d'appui sensiblement continue pour recevoir le joint. Ceci permet d'améliorer la fonction étanchéité entre le radiateur et la chambre dans la mesure où le joint 208 est comprimé entre des surfaces essentiellement planes (celle du contour périphérique extérieur du radiateur 20 et celle du contour périphérique intérieur du passage d'introduction 22). Le joint 208 présente une forme générale rectangulaire essentiellement complémentaire du contour périphérique du radiateur 20. Il présente préférentiellement une section essentiellement rectangulaire.

Le joint 208 est préférentiellement solidarisé au radiateur par collage. Dans ce cas, il pourra comprendre un cordon de colle sur sa face destinée à venir en contact avec le contour périphérique du radiateur 20. Avant mise en place du joint, ce cordon sera recouvert d'un film protecteur amovible.

Le joint est réalisé par exemple dans une mousse de polyuréthane. Alternativement, il pourra être réalisé dans tout autre matériau adapté.

Les dimensions du joints 208 ainsi que sa rigidité seront choisies de manière telle qu'il soit comprimé entre le contour périphérique extérieur du radiateur 20 et le contour périphérique intérieur du passage d'introduction 22 et épouse de part et d'autre leur forme lorsque le radiateur 20 se trouve logé à l'intérieur de la chambre 21. Le joint 208 assure ainsi le remplissage de la fonction étanchéité entre le radiateur 20 et la chambre 21 lorsque le radiateur 20 est logé dans la chambre 21. La chambre 21 constitue alors en enceinte hermétique étanche en particulier à l'air.

Le joint 208 pourra ou non être préformé. S'il est préformé, il sera un peu plus rigide de telle sorte que son contour périphérique aura la forme de celui du radiateur 20 si bien que sa mise en place sur le radiateur 20 ne requerra pas de lui en faire épouser la forme. S'il n'est pas préformé, sa mise en place autour du radiateur supposera plus de dextérité de la part de l'opérateur.

Le joint 208 est préférentiellement pré-assemblé sur le radiateur 20. Le radiateur 20 et le joint 208 forment alors un ensemble monobloc amovible pouvant être inséré dans la chambre ou être extrait de celle-ci d'un bloc.

### 6.2.2. Montage

### i. Mise en place du joint

### i.1. Joint non préformé

Lorsque le joint 208 n'est pas préformé, celui-ci est rapporté autour du radiateur 20 en le faisant s'étendre le long des bords (ailes 2072) de la plaque d'extrémité 207 et en encerclant les réservoirs 204, 205 au niveau de l'extrémité du radiateur 20 destinée à se trouver au niveau du passage d'introduction 22 lorsque le radiateur 20 est logé dans la chambre 21.

Un cordon de colle est préalablement déposé à la surface du joint 208 qui sera en regard du radiateur.

Lorsque le joint 208 est déjà muni d'un cordon de col, il suffira de ôter le film protecteur recouvrant celui-ci avant de positionner le joint 208.

### i.2. Joint préformé

Lorsque le joint 208 est préformé, ce qui signifie que sa rigidité est supérieure pour qu'il présente au repos une forme plus proche de celle du contour périphérique du radiateur 20 que lorsqu'il n'est pas préformé, la mise en place du joint 208 est identique à celle d'un joint non préformé mise à part le fait que son positionnement est plus aisé et demande moins d'attention de la part de l'opérateur.

### i.3. Ensemble monobloc

Lorsque le radiateur 20 forme avec le joint 208 un ensemble monobloc, la mise en place du joint sur le radiateur est réalisée en production, ce qui évite à l'opérateur en charge de l'assemblage du système HVAC de procéder à sa mise en place sur la radiateur.

### ii. Mise en place du radiateur

Une fois que le joint 208 est mis en place sur le radiateur 20, soit manuellement (cas du joint préformé ou non) ou en production (cas de l'ensemble monobloc), le radiateur 20 est inséré à l'intérieur de la chambre 21 en lui faisant traverser le passage d'introduction 22.

Le radiateur 20 est poussé à l'intérieur de la chambre 21 jusqu'à ce que son extrémité portant le joint 208 destinée à venir au niveau du passage d'introduction 22 s'y trouve effectivement.

Le joint 208 se trouve alors comprimé entre le contour périphérique extérieur du radiateur 20 et le contour périphérique intérieur de la chambre 21 à proximité du passage d'introduction 22.

Le joint 208 ainsi comprimé assure la fonction étanchéité entre le radiateur 20 et la chambre 21. Le passage d'introduction à l'extrémité ouverte de la chambre 21 se trouve fermé, lorsque le radiateur est entièrement logé dans la chambre, par l'extrémité du radiateur se trouvant au niveau du passage d'introduction 22, et ce de manière hermétique grâce au joint 208.

Le maintien du radiateur 20 à l'intérieur de la chambre est de préférence assuré au moyen d'un système de clippage comprenant par exemple des pattes élastiques solidaires du boîtier. Ceci évite l'extraction fortuite du radiateur en dehors du boîtier.

La technique selon l'invention permet ainsi de refermer de manière hermétique la chambre en assurant la fonction étanchéité entre le radiateur et celle-ci par la simple mise en œuvre d'un joint périphérique autour du radiateur sans qu'il soit nécessaire de mettre en œuvre pour cela un joint d'extrémité et un couvercle comme le prévoit l'art antérieur.

La technique selon l'invention permet d'améliorer l'étanchéité de la chambre tout en simplifiant la manière de l'obtenir.

### ii. Extraction du radiateur

L'ensemble constitué du radiateur 20 et du joint 208 qui en est solidaire peut être retiré d'un bloc de la chambre 21 lorsque cela est nécessaire.

## Revendications

1. Radiateur (20) comprenant un corps (201) et deux réservoirs (204, 205) disposés à deux côtés opposés dudit un corps (201), ledit corps (201) comprenant une pluralité de tubes (202) débouchant à chacune de leurs extrémités dans l'un desdits réservoirs (204, 205) et des intercalaires (203) disposées de part et d'autre de chacun desdits tubes (202), ledit radiateur (20) comprenant à une première extrémités dudit corps (201) une plaque d'extrémité (207) s'étirant sensiblement entre lesdits réservoirs (204, 205), ladite plaque d'extrémité (207) présentant une section essentiellement en U avec un fond (2071) prolongé par deux ailes latérales (2072), ledit fond (2071) venant au contact de l'intercalaire (203₁) situé à ladite première extrémité , ladite plaque d'extrémité (207) portant un joint d'étanchéité (208) s'étendant autour de ladite première extrémité, **caractérisé en ce que** lesdites ailes (2072) s'étirent le long des côtés de cet intercalaire (203₁).

2. Radiateur selon la revendication 1 dans lequel la largeur (A) de ladite plaque d'extrémité (207), dans un plan transversal auxdits tubes (202) et selon une direction parallèle auxdits tubes (202), est supérieure ou égale à l'épaisseur (B) dudit corps (201) et inférieure à la largeur (C) desdits réservoirs (204, 205).

3. Radiateur selon la revendication 1 ou 2 dans lequel la paroi de chaque réservoir (204, 205) présente une épaisseur e, la distance d de part et d'autre du radiateur (20) entre le bord de chaque réservoir (204, 205) et ledit corps (201) étant inférieure au double de l'épaisseur e.

4. Radiateur selon la revendication 3 dans lequel ladite distance d est inférieure ou égale à 1 millimètre.

5. Radiateur selon l'une quelconque des revendications 1 à 4 dans lequel chaque réservoir (204, 205) comprend un collecteur (24) ayant une section sensiblement en U avec une paroi de fond (241) et deux parois latérales (242) et un couvercle (25) ayant une section sensiblement en U une paroi de fond (251) et deux parois latérales (252), les parois latérales (241) du collecteur (24) présentant des butées (27) formant saillie à l'intérieur du collecteur (24) à distance du fond de celle-ci, lesdites parois latérales (252) dudit couvercle (25) étant en appuis contre lesdites butées (27).

6. Radiateur selon l'une quelconque des revendications 1 à 4 dans lequel lesdites ailes (2072) de ladite plaque d'extrémité (207) s'étendent sur sensiblement la moitié de l'épaisseur dudit intercalaire (203₁) placé à ladite première extrémité.

7. Radiateur selon l'une quelconque des revendications 1 à 6 dans lequel le bord extérieur dudit fond (2071) de ladite plaque d'extrémité (207) s'étend essentiellement dans le prolongement de l'extrémité correspondante desdits réservoirs (204, 205).

8. Radiateur selon l'une quelconque des revendications 1 à 7 dans lequel la longueur (L) desdits réservoirs (204, 205) au-delà du premier tube (202₁) à ladite première extrémité dudit corps (201) est sensiblement inférieure ou égale au pas (P) desdits tubes (202).

9. Radiateur selon l'une quelconque des revendications 1 à 8 dans lequel ledit joint (208) s'étend autour dudit radiateur (20) en encerclant lesdits réservoirs (204, 205).

10. Radiateur selon l'une quelconque des revendications 1 à 9 dans lequel ledit joint (208) à une forme générale rectangulaire.

11. Radiateur selon l'une quelconque des revendications 1 à 10 dans lequel ledit joint (208) est solidarisé audit radiateur (20) par collage.

12. Système (200) de chauffage, ventilation ou climatisation comprenant un radiateur (20) selon l'une quelconque des revendications 1 à 11 et une chambre (21) hermétique munie d'un passage d'introduction (22) dudit radiateur (20), ledit radiateur (20) étant logé dans ladite chambre (21),
ledit joint (208) disposé autour dudit radiateur (20) assurant l'étanchéité entre le contour dudit radiateur (20) et ledit passage d'introduction (22).

13. Système selon la revendication 12 dans lequel ledit joint (208) s'étend autour de l'extrémité dudit radiateur (20) se trouvant au niveau du passage d'introduction (22) lorsque le radiateur (20) se trouve logé dans la chambre (21).

14. Système selon l'une quelconque des revendications 12 et 13 dans lequel ledit radiateur (20) forme avec ledit joint (208) un ensemble monobloc amovible pouvant être inséré dans ladite chambre (21) ou extrait de celle-ci.

## Patentansprüche

1. Wärmetauscher (20), welcher einen Körper (201) und zwei Behälter (204, 205), die auf zwei gegenüberliegenden Seiten dieses einen Körpers (201) angeordnet sind, umfasst, wobei der Körper (201) mehrere Rohre (202), die an jedem ihrer Enden in einen der Behälter (204, 205) münden, und Einlagen (203), die beiderseits jedes der Rohre (202) angeordnet sind, umfasst, wobei der Wärmetauscher (20) an einem ersten Ende des Körpers (201) eine Endplatte (207) umfasst, die sich im Wesentlichen zwischen den Behältern (204, 205) erstreckt,
wobei die Endplatte (207) einen im Wesentlichen U-förmigen Abschnitt mit einem Boden (2071) aufweist, der durch zwei seitliche Schenkel (2072) verlängert wird, wobei der Boden (2071) mit der Einlage (203₁) in Kontakt kommt, die sich am ersten Ende befindet, wobei die Endplatte (207) einen Dichtungsring (208) trägt, der sich um das erste Ende herum erstreckt,
**dadurch gekennzeichnet, dass** sich die Schenkel (2072) entlang der Seiten dieser Einlage (203₁) erstrecken.

2. Wärmetauscher nach Anspruch 1, wobei die Breite (A) der Endplatte (207), in einer quer zu den Rohren (202) verlaufenden Ebene und in einer zu den Rohren (202) parallelen Richtung, größer oder gleich der Dicke (B) des Körpers (201) und kleiner als die Breite (C) der Behälter (204, 205) ist.

3. Wärmetauscher nach Anspruch 1 oder 2, wobei die Wand jedes Behälters (204, 205) eine Dicke e aufweist, wobei der Abstand d beiderseits des Wärmetauschers (20) zwischen dem Rand jedes Behälters (204, 205) und dem Körper (201) kleiner als das Doppelte der Dicke e ist.

4. Wärmetauscher nach Anspruch 3, wobei der Abstand d kleiner oder gleich 1 Millimeter ist.

5. Wärmetauscher nach einem der Ansprüche 1 bis 4, wobei jeder Behälter (204, 205) einen Rohrboden (24), der einen im Wesentlichen U-förmigen Querschnitt mit einer Bodenwand (241) und zwei Seitenwänden (242) aufweist, und eine Abdeckung (25), die einen im Wesentlichen U-förmigen Querschnitt mit einer Bodenwand (251) und zwei Seitenwänden (252) aufweist, umfasst, wobei die Seitenwände (241) des Rohrbodens (24) Anschläge (27) aufweisen, die in das Innere des Rohrbodens (24) in einem Abstand vom Boden desselben hineinragen, wobei die Seitenwände (252) der Abdeckung (25) an den Anschlägen (27) anliegen.

6. Wärmetauscher nach einem der Ansprüche 1 bis 4, wobei sich die Schenkel (2072) jeder Endplatte (207) im Wesentlichen über die Hälfte der Dicke der Einlage (203₁) erstrecken, die an dem ersten Ende angeordnet ist.

7. Wärmetauscher nach einem der Ansprüche 1 bis 6, wobei sich der äußere Rand des Bodens (2071) der Endplatte (207) im Wesentlichen in der Verlängerung des entsprechenden Endes der Behälter (204, 205) erstreckt.

8. Wärmetauscher nach einem der Ansprüche 1 bis 7, wobei die Länge (L) der Behälter (204, 205), die am ersten Ende des Körpers (201) über das erste Rohr (202₁) hinausragt, im Wesentlichen kleiner oder gleich dem Mitte-zu-Mitte-Abstand (P) der Rohre (202) ist.

9. Wärmetauscher nach einem der Ansprüche 1 bis 8, wobei sich die Dichtung (208) um den Wärmetauscher (20) herum erstreckt und dabei die Behälter (204, 205) umschließt.

10. Wärmetauscher nach einem der Ansprüche 1 bis 9, wobei die Dichtung (208) eine rechteckige allgemeine Form aufweist.

11. Wärmetauscher nach einem der Ansprüche 1 bis 10, wobei die Dichtung (208) mit dem Wärmetauscher (20) durch Kleben fest verbunden ist.

12. Heizungs-, Lüftungs- oder Klimasystem (200), welches einen Wärmetauscher (20) nach einem der Ansprüche 1 bis 11 und eine hermetische Kammer (21), die mit einem Durchlass zur Einführung (22) des Wärmetauschers (20) versehen ist, umfasst, wobei der Wärmetauscher (20) in der Kammer (21) aufgenommen ist,
wobei die Dichtung (208), die um den Wärmetauscher (20) herum angeordnet ist, die Dichtigkeit zwischen dem Umfang des Wärmetauschers (20) und dem Durchlass zur Einführung (22) sicherstellt.

13. System nach Anspruch 12, wobei sich die Dichtung (208) um das Ende des Wärmetauschers (20) herum erstreckt, das sich an dem Durchlass zur Einführung (22) befindet, wenn der Wärmetauscher (20) in der Kammer (21) aufgenommen ist.

14. System nach einem der Ansprüche 12 und 13, wobei der Wärmetauscher (20) mit der Dichtung (208) eine herausnehmbare einstückige Gesamtheit bildet, die in die Kammer (21) eingesetzt oder aus dieser herausgezogen werden kann.

## Claims

1. Radiator (20) comprising a body (201) and two tanks (204, 205) arranged on two opposing sides of said one body (201), said body (201) comprising a plurality of tubes (202) opening at each end into one of said tanks (204, 205), and spacers (203) arranged on either side of each of said tubes (202), said radiator (20) comprising an end plate (207) at a first end of said body (201) and extending substantially between said tanks (204, 205), said end plate (207) having an essentially U-shaped cross-section with a base (2071) extending into two side wings (2072), said base (2071) coming into contact with the spacer (203₁) situated at said first end, said end plate (207) bearing a sealing gasket (208) extending around said first end, **characterized in that** said wings (2072) extend along the sides of said spacer (203₁).

2. Radiator according to Claim 1, wherein the width (A) of said end plate (207), in a plane transversely to said tubes (202) and in a direction parallel to said tubes (202), is greater than or equal to the thickness (B) of said body (201) and less than the width (C) of said tanks (204, 205).

3. Radiator according to Claim 1 or 2, wherein the wall of each tank (204, 205) has a thickness e, the distance d on either side of the radiator (20) between the edge of each tank (204, 205) and said body (201) being less than twice the thickness e.

4. Radiator according to Claim 3, wherein said distance d is less than or equal to 1 millimeter.

5. Radiator according to any of Claims 1 to 4, wherein each tank (204, 205) comprises a header (24) having a substantially U-shaped cross-section, with a base wall (241) and two side walls (242), and a cover (25) having a substantially U-shaped cross-section with a base wall (251) and two side walls (252), the side walls (241) of the header (24) having stops (27) protruding to the inside of the header (24) at a distance from its base, said side walls (252) of said cover (25) resting against said stops (27) .

6. Radiator according to any of Claims 1 to 4, wherein said wings (2072) of each end plate (207) extend substantially over half the thickness of said spacer (203₁) situated at said first end.

7. Radiator according to any of Claims 1 to 6, wherein the outer edge of said base (2071) of said end plate (207) extends essentially in the extension of the corresponding end of said tanks (204, 205).

8. Radiator according to any of Claims 1 to 7, wherein the length (L) of said tanks (204, 205) beyond the first tube (202₁) at said first end of said body (201) is substantially less than or equal to the pitch (P) of said tubes (202).

9. Radiator according to any of Claims 1 to 8, wherein said sealing gasket (208) extends around said radiator (20), encircling said tanks (204, 205).

10. Radiator according to any of Claims 1 to 9, wherein said sealing gasket (208) has a generally rectangular form.

11. Radiator according to any of Claims 1 to 10, wherein said sealing gasket (208) is attached to said radiator (20) by gluing.

12. Heating, ventilation or air-conditioning system (200) comprising a radiator (20) according to any of Claims 1 to 11, and a hermetically sealed chamber (21) equipped with a passage (22) for insertion of said radiator (20), said radiator (20) being housed in said chamber (21),
said sealing gasket (208) arranged around said radiator (20) ensuring the seal between the contour of said radiator (20) and said insertion passage (22).

13. System according to Claim 12, wherein said sealing gasket (208) extends around the end of said radiator (20) at the level of the insertion passage (22) when the radiator (20) is housed in the chamber (21).

14. System according to one of Claims 12 and 13, wherein said radiator (20) with said sealing gasket (208) forms a removable monobloc assembly which can be inserted in or extracted from said chamber (21).
